(19) **Europäisches Patentamt European Patent Office Office européen des brevets**

(11) **EP 4 596 389 B1**

(12) **EUROPEAN PATENT SPECIFICATION**

(45) Date of publication and mention
of the grant of the patent:
**15.07.2026   Bulletin 2026/29**

(21) Application number: **23798494.3**

(22) Date of filing: **26.09.2023**

(51) International Patent Classification (IPC):
**B63B 43/06** *(2006.01)*        **B63B 77/00** *(2020.01)*
**F03D 13/25** *(2016.01)*

(52) Cooperative Patent Classification (CPC):
**B63B 77/00; B63B 43/06;** B63B 2035/446;
F03D 13/256; Y02E 10/72

(86) International application number:
**PCT/ES2023/070573**

(87) International publication number:
**WO 2024/069032 (04.04.2024 Gazette 2024/14)**

(54) **FOUNDATION DEVICE FOR AN OFFSHORE WIND TURBINE TOWER**

GRÜNDUNGSVORRICHTUNG FÜR EINEN OFFSHORE-WINDTURBINENTURM

DISPOSITIF POUR L'ÉTABLISSEMENT D'UNE FONDATION D'UNE TOUR ÉOLIENNE EN HAUTE
MER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **26.09.2022   ES 202230821**

(43) Date of publication of application:
**06.08.2025   Bulletin 2025/32**

(73) Proprietor: **Bluenewables S.L.**
**38689 Guía de Isora-Santa Cruz de Tenerife (ES)**

(72) Inventors:
  • **COUÑAGO LORENZO, Bernardino**
   **28050 Madrid (ES)**
  • **SAINZ ÁVILA, Óscar**
   **3012 VC Rotterdam (NL)**

  • **FERNÁNDEZ GIL, Ismael**
   **38650 Los Cristianos -Sta. Cruz Tenerife (ES)**
  • **HERNÁNDEZ BLANCO, Sergio**
   **Valdemorillo 28210 (ES)**
  • **BARAHONA OVIEDO, Cecilio**
   **28003 Madrid (ES)**
  • **ARÉVALO PÉREZ, Alfonso**
   **28034 Madrid (ES)**

(74) Representative: **TRBL Intellectual Property**
**Plaza de Castilla 3, 7°A**
**28046 Madrid (ES)**

(56) References cited:
   **WO-A1-2013/083358        WO-A1-2018/150064
   WO-A1-2018/189084        US-A1- 2005 169 714
   US-A1- 2019 078 556**

**Description**

**TECHNICAL FIELD**

This invention belongs to the technical field of structures for supporting wind turbines in offshore installations.

**STATE OF THE ART**

When an offshore wind turbine tower is installed, a suitable system for the laying of the foundation and stabilization needs to be provided.

There are many different methods and devices intended for this purpose. They can all be classified according to four types of classifications based on the manner in which the structure obtains stability: semi-submersible platforms, TLP, SPAR or barges.

Semi-submersible platforms are platforms with a stability acquired as a result of their high flotation inertia providing high metacentric radii, thus making up for their high center of gravity. They are characterized by good offshore performance, but based on the evolution of wind turbine power (increasingly higher), they are taking on large dimensions, which makes it difficult to find construction docks and ports with the required dimensions and drafts.

Examples of these semi-submersible platforms can be found in documents WO 2018/189084 A1 and WO 2018/150064 A1. First of these documents discloses a semi-submersible floating device which comprises means forming an additional buoyancy and ballasting caisson, movably mounted below the rest of the floater between a retracted handling position, against the floater, and a deployed use position, spaced below the floater. Second of these documents discloses a floating structure for large offshore wind turbines, formed by a lower triangular caisson made of reinforced concrete and by an upper triangular caisson made of metal on which the shaft of the wind turbine is supported, both joined by means of three liftable columns disposed in the corners thereof. The has semi-submersible components, since it has three floats on the waterline level that increase the restoring moment thereof.

TLPs (Tension-Leg Platforms) are platforms which acquire stability by means of their anchoring system, which is pulled taut because the main structure has a hydrostatic thrust that is greater than its weight. The offshore behavior of platforms of this type is exceptional, with the drawback of the difficulties involved with their installation due to the large tendons they have.

SPAR platforms are stable platforms because their center of gravity is lower than the center of the hull. Due to their transparency to the action of the waves as a result of their low surface and high natural periods, they behave exceptionally well offshore.

Barges, like semi-submersible platforms, acquire their stability due to their high flotation inertia with a worse offshore behavior.

The invention described below is based on the concept of SPAR type structures. In addition to the installation problems inherent to platforms of this type, it should be noted that many of these platforms do not have the stability needed for transport and require means additional (barges or cranes) for their transport and installation, but this is not the case of the described invention.

The present invention proves an alternative solution to the solutions that are already known.

**BRIEF DESCRIPTION OF THE INVENTION**

As indicated, the present invention provides an alternative solution for laying the foundation of offshore towers by means of a device for laying the foundation according to claim 1. The preferred embodiments of the invention are defined in the dependent claims.

Unless otherwise defined, all terms (including technical and scientific terms) used herein are to be interpreted as is customary in the art. It is further understood that terms of common usage are also to be interpreted as customary in the relevant art and not in an idealized or overly formalized sense, unless expressly defined herein.

In this text, the term "comprises" and its derivations (such as "comprising", etc.) must not be understood in an excluding sense; i.e., these terms must not be interpreted as being exclusive of the possibility that what has been described and defined may include other elements, steps, etc.

In a first inventive aspect, the invention relates to a device for supporting a wind turbine tower, the device comprising a first body, a support body attached to the first body, a second body and a plurality of legs attached to the second body, wherein

the support body has a cylindrical interior which defines a tower axis and is configured to provide support for and connection of a wind turbine tower;
the first body comprises a central portion connected to the support body and a plurality of hollow arms, connected with the central portion, wherein each hollow arm extends radially from the central portion and comprises a first surface perpendicular to the tower axis and a second surface parallel to the first surface, wherein the first surfaces of the hollow arms are contained in a first reference plane and the second surfaces of the hollow arms are contained in a second reference plane, wherein the first reference plane is further from the second body than the second reference plane;
each hollow arm comprises a through-hole which extends from the first surface to the second surface, wherein the through-hole is configured to allow a leg to pass through the through-hole;
the first body has a volume and a weight configured to provide, when empty, a buoyancy of at least 20% of the weight of the entire device, being the weight of the first body less than 8% of the weight of the entire device;

the first body has a first ballast management element to selectively allow the entry and exit of water into/out of the first body;

the second body has a first surface and a second surface, both parallel to the first and second reference planes, wherein the first surface is closer to the first body than the second surface;

the second body has a ballast management element to selectively allow the entry and exit of water into/out of the second body; and

the legs and/or the first body have a locking system configured to lock the relative position between the legs and the first body.

The first body is a hollow body providing a high buoyancy to weight ratio. In fact, it contributes at least 20% of the flotation force of the total device, whereas the weight is less than 8% of the total device.

Furthermore, the second body is much heavier than the first body, and the fact that this second body is submerged several meters below the first body contributes to a high stability of the device by providing a stable location of an offshore wind turbine tower without the need of adding elements which provide buoyancy inertia on the surface. The device according to the invention is designed to be completely submerged once in operation, in such a way that the support body would be the only element outside the water surface.

Ballast management elements both in the first body and in the second allow good personalization of the final position and of the hydrostatic equilibrium of the device. It also allows an easy disassembly of the device in the case of maintenance tasks or in the case of final dismantling.

In particular embodiments, the legs have a length equal to or greater than the sum of the distance between the first reference plane and the second reference plane plus 55% of the distance between the first reference plane and the second surface of the second body. In this way, the distance between the first body and the second body can be large enough to contribute positively to increasing the stability of the assembly.

In particular embodiments, the through-holes comprise a plurality of rollers to ensure a smooth sliding of the legs inside the through-holes.

The legs move several meters to allow the second body to reach its final position below sea level. Therefore, these rollers prevent the legs from being damaged when performing this operation.

In particular embodiments, the central portion is hollow and has a main cross-section with an area larger than the cross-section of any of the hollow arms, where the main cross-section contains the tower axis and the cross-section of the hollow arms is measured according a plane perpendicular to the tower axis and perpendicular to the first surface of said hollow arm.

This creates a stable flotation pattern. This central portion receives the auxiliary elements and support mechanisms (cranes, maintenance accesses, lights, etc.).

The corresponding axis of extension refers, in the case of the arms, to the axis starting from the central section and extending along the arm. In the case of the central section, any plane that cuts the central section along the vertical central axis could be used.

In particular embodiments, each leg comprises a stop configured to cooperate with each through-hole to prevent the leg from coming out of the first body.

The stops provide an advantageous way to define the final position of the second body with respect to the first body.

In particular embodiments, the legs and/or the first body have a locking system configured to lock the relative position between the legs and the first body.

The locking system is configured to prevent the relative position between the first body and the second body from being able to be altered during the operation of the device.

In particular embodiments, the locking system comprises hydraulic cylinders.

These hydraulic cylinders provide a high force that ensures the correct locking of these two elements.

In particular embodiments, the second body has a beveled hollow polygon shape, preferably a beveled hollow triangle.

This structure provides an optimal ratio between weight, volume and stability.

In particular embodiments, each beveled vertex of the triangle receives one of the legs.

Due to the fact that the legs are located at an outer distance from the center of the first portion, the device behaves in a stable manner.

In particular embodiments, the support body comprises a plurality of planar protrusions arranged in a radial manner, wherein the dimension in the direction of the axis of the support body is larger than the dimension in the radial direction.

The central element usually has a cylindrical shape. The vertical axis is thereby defined by the axis of the cylinder. The protrusions extend radially from said axis such that they are higher than they are large, allowing stabilization of the system in yaw.

In particular embodiments, the first body comprises planar plates prolonging from the base of the first body which is closer to the second body.

These planar plates allow control over the back-and-forth instability, increasing the natural period of the device against back-and-forth oscillations, by means of the increase in mass and damping, such that total stability of the device increases.

In particular embodiments, the device further comprises mooring lines attached to the first body.

In particular embodiments, the legs have a cylindrical shape. However, in other situations, they can have a polygonal cross-section such as, for example, triangular. That is advantageous when there are no means available to bend the plates forming said legs.

In particular embodiments, the legs comprise first guide elements and the through-holes comprise second guide elements, configured to cooperate with the first guide elements to guide the movement of the legs through the through-holes.

Optimal sliding is thereby ensured, preventing play and movements on axes other than the axis of movement.

In particular embodiments, one of the guide elements is a groove and the other guide element is a protrusion configured to slide through the groove.

## SUMMARY OF THE FIGURES

To complete the description and for the purpose of providing a better understanding of the invention, a set of drawings is provided. Said drawings are an integral part of the description and illustrate an embodiment of the invention, which must not be interpreted as a restriction of the scope of the invention, but rather only as an example of how the invention can be carried out. The drawings comprise the following figures:

Figure 1 shows an operating diagram of a device for laying the foundation of a wind turbine tower according to the invention.

Figure 2 shows details of the guide system of the legs with respect to the holes of the first body in a device for laying the foundation of a wind turbine tower according to the invention.

Figures 3 to 5 show different steps of the assembly of a device according to the present invention.

Figure 6 shows the length of the legs of the device in relation to the size of the same.

The following reference numbers are used in these figures:

| 1 | First body |
|---|---|
| 2 | Second body |
| 3 | Support body |
| 4 | Legs |
| 5 | Central portion of the first body |
| 6 | Arms of the first body |
| 7 | Through-hole of the first body |
| 8 | Mooring cable |
| 9 | Yaw stabilization protrusions |
| 10 | Wind turbine tower |
| 11 | Back-and-forth stabilization plates |
| 12 | Sliding rollers |
| 13 | Guide protrusions |
| 14 | Guide grooves |
| 15 | Hydraulic cylinders |
| 20 | First surface of the second body |
| 21 | Second surface of the second body |
| 100 | First reference plane of the first body |
| 101 | Second reference plane of the first body |

## DETAILED DESCRIPTION OF A PARTICULAR EMBODIMENT

The embodiments are described with sufficient detail for one skilled in the art to be able to incorporate and put into practice the systems and processes described herein. It is important to understand that the embodiments can be provided in many alternative forms and must not be interpreted as being limited to the examples herein set forth.

Accordingly, although the embodiments can be modified in several ways and adopt several alternative forms, the drawings show specific embodiments and are described in detail below as examples. There is no intention of being limited to the particular forms disclosed. In contrast, all the modifications, equivalents and alternatives that fall within the scope of the attached claims must be included. The elements of the exemplary embodiments are consistently denoted with the same reference numbers throughout the drawings and the detailed description, where appropriate.

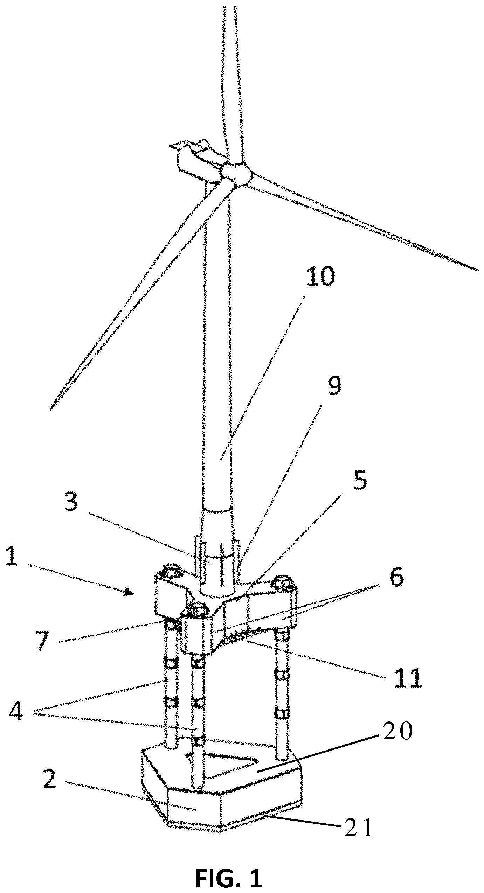

Figure 1 shows an operating diagram of a device for laying the foundation of a wind turbine tower according to the invention.

In this figure, the device can be seen without the wind turbine tower, and without the reference of the waterline.

This device comprises a first body 1 and a second body 2.

Above the first body there is a support body 3, attached to the first body 1. This support body 3 will be in charge of receiving the wind turbine tower, and for this reason its interior is cylindrical. This support body 3 defines a tower axis, which will serve as a reference to define the orientations of other elements.

The first body 1 comprises a central portion 5, which is what is connected to the support body 3. This central portion 5 is also cylindrical and concentric with the support body 3. The wind turbine tower is thereby anchored in the center of the device for laying the foundation.

In addition to the central portion 5, the first body 1 comprises a plurality of arms 6 connected with the central portion 5. Each hollow arm 6 extends radially from the central portion 5 and comprises an upper surface perpendicular to the tower axis and a lower surface parallel to the first surface. The upper surfaces of the hollow arms are contained in a first reference plane 100 and the lower surfaces of the hollow arms are contained in a second reference plane 101. As can be seen, the first reference plane 100 is further away from the second body 2 than the second reference plane 101. These arms 6 are hollow to allow the regulation of the flotation provided by this first body 1.

The device further comprises a second body 2. This second body 2 is intended for being entirely submersed at a depth of several meters with respect to the first body 1, which is intended for being located close to (but below) the surface of the sea. The second body 2 has a first surface 20 and a second surface 21, both parallel to the first and second reference plane, where the first surface 20 is closer to the first body 1 than the second surface 21.

The movement of the second body 2 with respect to the first body 1 is performed by means of a series of cylindrical legs 4. These legs 4 are fixed integrally to the second body 2 and introduced in through-holes 7 present in the first body 1, which extend from the upper surface of each arm to the lower surface of the same. During the transfer of the device, the first body 1 and the second body 2 are located very close to one another, so the legs 4 protrude several meters above the first body 1. Once the device reaches the site of the foundation, the second body 2 descends, taking with it the legs 4, which were integrally attached to the second body 2, so these legs 4 slide through the through-holes 7 present in the first body 1. Once the final position is reached, the device comprises a locking system that locks the relative position between the legs 4 and the first body 1 in the operation position, so that the waves and forces to which the device is subjected do not cause the legs 4 to move with respect to the first body 1. This would cause the distance between the first body 1 and the second body 2 to vary, and the operation of the device for laying the foundation would be compromised.

Both the first body 1 and the second body 2 have a ballast management element to selectively allow the entry and exit of water into/out of the body corresponding. The flotation of both bodies can thereby be controlled during transport, assembly, sinking and final anchoring processes of the device.

The first body 1 has a volume and a weight configured to provide, when empty, a buoyancy of 25% of the weight of the entire device, the empty weight of the first body 1 being around 4% of the weight of the entire device. In contrast, the second body 2 has an empty weight around 90% of the weight of the device. A very low center of gravity and a very high center of buoyancy are thereby achieved, increasing the stability of the system.

Moreover, the central portion 5 is hollow and has a main cross-section (the one that is measured perpendicular to the cylindrical axis thereof) with an area larger than the cross-section (measured transverse to the axis along which each arm extends) of any of the hollow arms.

The second body 2 has a beveled hollow triangle shape, such that each beveled vertex of the triangle receives one of the legs 4. As a result of this distribution with a hollow inner, a better stability in relation to weight is achieved.

Each leg 4 comprises a stop configured to cooperate with each through-hole 7 to prevent the leg 4 from coming out of the first body 1 as the second body 2 descends and the distance that each leg 4 protrudes decreases.

Two stability elements can also be seen in this figure.

Firstly, a plurality of planar protrusions 9 arranged in a radial manner coming from the support body 3, in which the dimension in the direction of the axis of the support body is larger than the dimension in the radial direction. The protrusions extend radially from the axis of the support body 3 such that they are higher than they are long, allowing stabilization of the system in yaw.

Secondly, planar plates 11 prolonging from the lower base of the first body 1. These planar plates allow control over the back-and-forth instability, increasing the natural period of the device against back-and-forth oscillations, by means of the increase in mass and damping, such that total stability of the device increases.

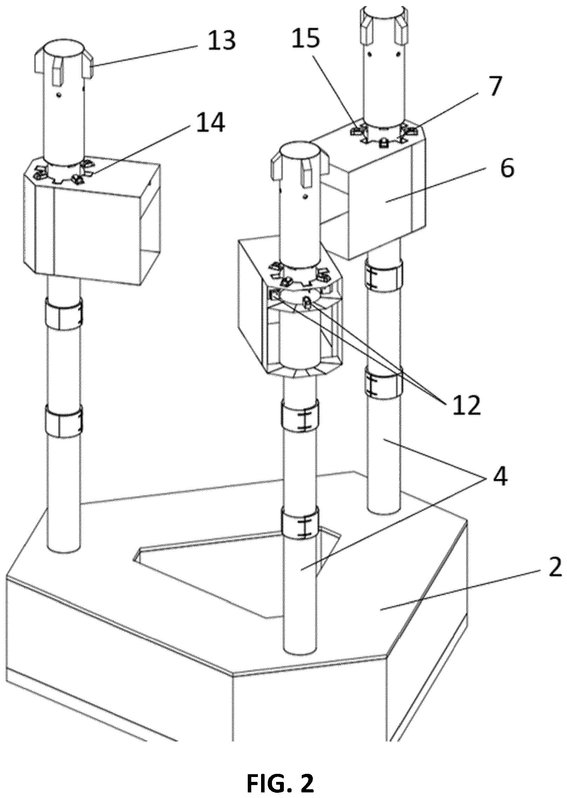

Figure 2 is developed from a section in some elements making up a device according to the invention.

In this image, the hollow arms 6 have been sectioned for better understanding of the elements that are included in this figure.

As is shown in the preceding figure, the legs 4 are introduced in the through-holes 7 that are located in each of the arms 6. There are rollers 12 in the interior of the arms that ensure the correct sliding of the legs, without play or movements in a direction other than the vertical direction. Wear of the legs due to forces coming from said axis is thereby prevented.

The tongue and grooving of the legs 4 can also be seen in this figure. This guiding is caused by means of the cooperation between vertical protrusions 13 comprised in the legs and grooves 14 comprised in the through-holes 7, suitable for receiving the protrusions 13 and thus guiding the legs 4.

In addition to the above, there are also hydraulic locking cylinders 15 which are intended for fixing the position of the legs 4 once they reach their final position.

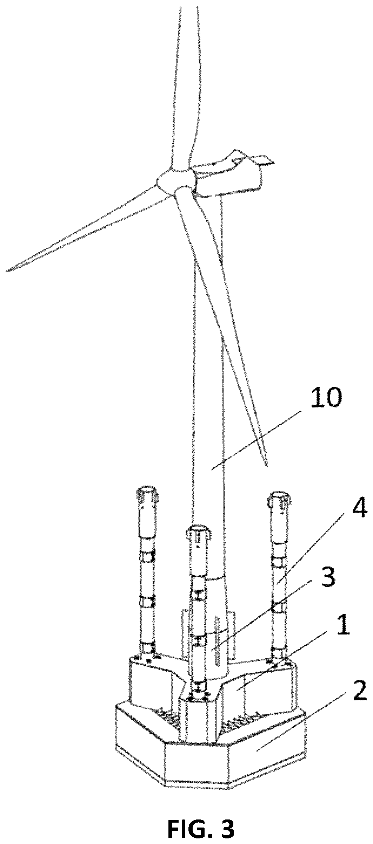

Figures 3 to 5 show different steps of the assembly of a device according to the present invention.

Figure 3 shows the assembly formed by the device for laying the foundation and a wind turbine tower 10 which has been assembled on the support body 3 on land.

Being able to install the equipment with land means and in a port area reduces the logistics process and eliminates the risks inherent to any offshore operation and between two bodies with different relative movements due to their different buoyancies.

Next, a number of tugboats may transport the structure to the point of installation.

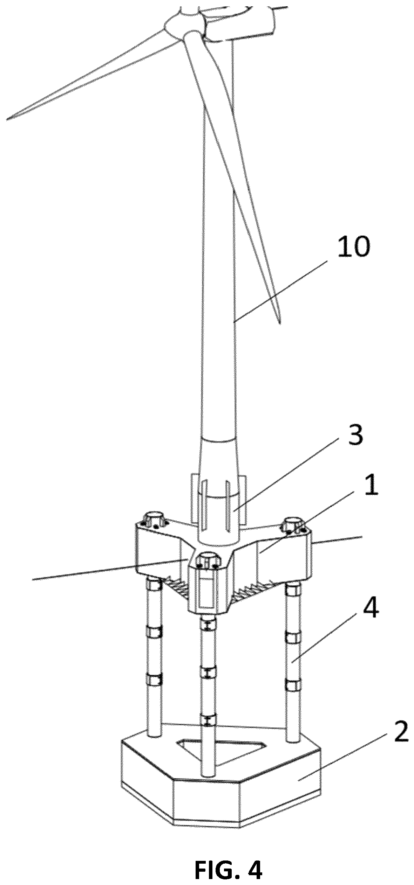

There, as shown in Figure 4, the ballasting means will be active to fill second body 2 with water. This will give rise to the immersion of said second body 2 and to the sliding of the legs 4 through the through-holes of the first body 1, given that said legs 4 are integrally attached to the second body 2 and, therefore, descend with it.

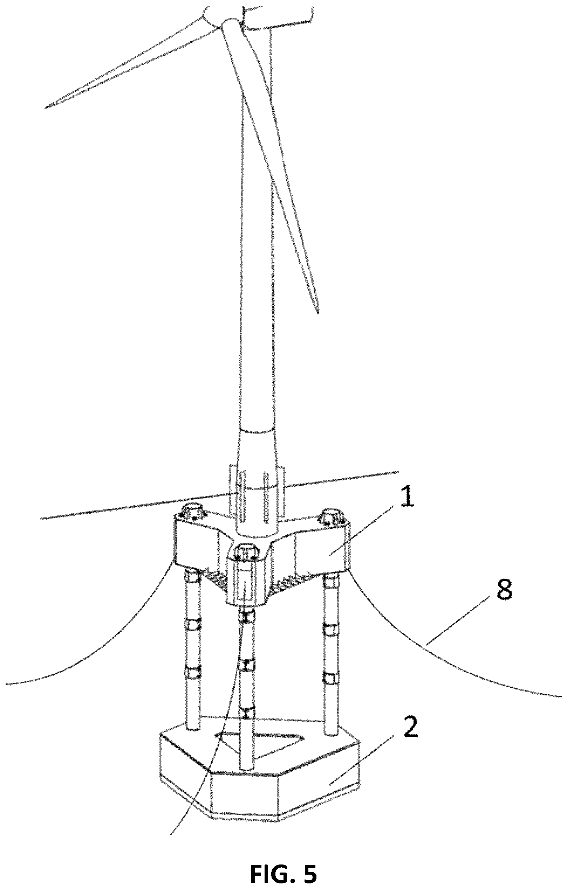

Figure 5 shows how, once the second body 2 has reached its operative position, the legs 4 are anchored with respect to the first body 1, so that the distance between the first body 1 and the second body 2 remains constant. The first body 1 is then partially ballasted so that said first body is then submerged. Finally, mooring cables 8 anchoring the first body 1 in the seabed are arranged.

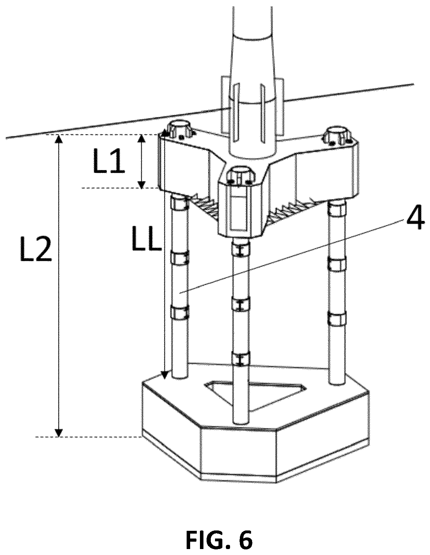

Figure 6 shows how the legs have a length LL greater than the sum of the distance between the first reference plane and the second reference plane L1 plus 55% of the distance between the first reference plane and the second surface of the second body L2:

$$LL > L1 + 0.55 \cdot L2$$

Thus, the length that remains visible after the structure is fully deployed is equal to or greater than 55% of the distance between the first reference plane and the second surface of the second body. This ensures that the distance between the first body and the second body contributes positively to the stability of the device once deployed and installed at sea.

**Claims**

1. A device for supporting a wind turbine tower, the device comprising a first body (1), a support body (3) attached to the first body (1), a second body (2) and a plurality of legs (4) attached to the second body (2), wherein

   the support body (3) has a cylindrical interior which defines a tower axis and is configured to provide support for and connection of a wind turbine tower (10);
   the first body (1) comprises a central portion (5) connected to the support body (3) and a plurality of hollow arms (6), connected with the central portion (5), wherein each hollow arm (6) extends radially from the central portion (5) and comprises a first surface perpendicular to the tower axis and a second surface parallel to the first surface, wherein the first surfaces of the hollow arms are contained in a first reference plane (100) and the second surfaces of the hollow arms are contained in a second reference plane (101), wherein the first reference plane (100) is further from the second body (2) than the second reference plane (101);
   each hollow arm (6) comprises a through-hole (7) which extends from the first surface to the second surface, wherein the through-hole (7) is configured to allow a leg (4) to pass through the through-hole;
   the first body (1) has a volume and a weight configured to provide, when empty, a buoyancy of at least 20% of the weight of the entire device, the weight of the first body (1) being less than 8% of the weight of the entire device;
   the first body (1) has a first ballast management element to selectively allow the entry and exit of water into/out of the first body;
   the second body (2) has a first surface (20) and a second surface (21), both parallel to the first and second reference planes, wherein the first surface (20) is closer to the first body (1) than the second surface (21);
   the second body (2) has a ballast management element to selectively allow the entry and exit of water into/out of the second body; and
   the legs (4) and/or the first body (1) have a locking system configured to lock the relative position between the legs and the first body.

2. The device according to claim 1, wherein the legs have a length equal to or greater than the sum of the distance between the first reference plane and the second reference plane plus 55% of the distance between the first reference plane and the second surface of the second body.

3. The device according to any of the preceding claims, wherein the through-holes (7) comprise a plurality of rollers to ensure a smooth sliding of the legs inside the through-holes (7).

4. The device according to any of the preceding claims, wherein the central portion (5) is hollow and has a main cross-section with an area larger than the cross-section of any of the hollow arms, where the main cross-section contains the tower axis and the cross-section of the hollow arms is measured according a plane perpendicular to the tower axis and perpendicular to the first surface of said hollow arm.

5. The device according to any of the preceding claims, wherein each leg (4) comprises a stop configured to cooperate with each through-hole (7) to prevent the leg (4) from coming out of the first body (1).

6. The device according to any of the preceding claims, wherein the locking system comprises hydraulic cylinders (15).

7. The device according to any of the preceding claims, wherein the second body (2) has a beveled hollow polygon shape, preferably a beveled hollow triangle.

8. The device according to any of the preceding claims, wherein each beveled vertex of the triangle receives one of the legs (4).

9. The device according to any of the preceding claims, wherein the support body (3) comprises a plurality of planar protrusions (9) arranged in a radial manner, wherein the dimension in the direction of the axis of the support body is larger than the dimension in the radial direction.

10. The device according to any of the preceding claims, wherein the first body (1) comprises planar plates (11) prolonging from the base of the first body which is closer to the second body (2).

11. The device according to any of the preceding claims, further comprising mooring lines (8) attached to the first body.

12. The device according to any of the preceding claims, wherein the legs (4) have a cylindrical shape.

13. The device according to any of the preceding claims, wherein the legs (4) comprise first guide elements (13) and the through-holes (7) comprise second guide elements (14), configured to cooperate with the first guide elements (13) to guide the movement of the legs (4) through the through-holes (7).

14. The device according to claim 13, wherein one of the guide elements is a groove and the other guide element is a protrusion configured to slide through the groove.

**Patentansprüche**

1. Vorrichtung zum Abstützen eines Windturbinenturms, wobei die Vorrichtung einen ersten Körper (1), einen am ersten Körper (1) angebrachten Abstützkörper (3), einen zweiten Körper (2) und eine Vielzahl von Schenkeln (4) umfasst, die am zweiten Körper (2) angebracht sind, wobei

   der Abstützkörper (3) ein zylindrisches Inneres aufweist, das eine Turmachse definiert und dazu konfiguriert ist, die Abstützung und Verbindung eines Windturbinenturms (10) bereitzustellen;
   der erste Körper (1) einen zentralen Abschnitt (5), der mit dem Abstützkörper (3) verbunden ist, und eine Vielzahl von Hohlarmen (6) umfasst, die mit dem zentralen Abschnitt (5) verbunden sind, wobei sich jeder Hohlarm (6) radial vom zentralen Abschnitt (5) erstreckt und eine erste Oberfläche, die senkrecht zur Turmachse liegt, und eine zweite Oberfläche, die parallel zur ersten Oberfläche liegt, umfasst, wobei die ersten Oberflächen der Hohlarme in einer ersten Bezugsebene (100) enthalten sind und die zweiten Oberflächen der Hohlarme in einer zweiten Bezugsebene (101) enthalten sind, wobei die erste Bezugsebene (100) weiter vom zweiten Körper (2) entfernt ist als die zweite Bezugsebene (101);
jeder Hohlarm (6) ein Durchgangsloch (7) umfasst, das sich von der ersten Oberfläche zur zweiten Oberfläche erstreckt, wobei das Durchgangsloch (7) dazu konfiguriert ist, dass ein Schenkel (4) durch das Durchgangsloch hindurchgeführt werden kann;
der erste Körper (1) ein Volumen und ein Gewicht aufweist, die dazu konfiguriert sind, im leeren Zustand einen Auftrieb von mindestens 20 % des Gewichts der gesamten Vorrichtung bereitzustellen, wobei das Gewicht des ersten Körpers (1) weniger als 8 % des Gewichts der gesamten Vorrichtung beträgt;
der erste Körper (1) ein erstes Ballastmanagementelement aufweist, um selektiv den Eintritt und Austritt von Wasser in den/aus dem ersten Körper zu ermöglichen;
der zweite Körper (2) eine erste Oberfläche (20) und eine zweite Oberfläche (21) aufweist, die beide parallel zur ersten und zweiten Bezugsebene liegen, wobei die erste Oberfläche (20) näher am ersten Körper (1) liegt als die zweite Oberfläche (21);
der zweite Körper (2) ein Ballastmanagementelement aufweist, um selektiv den Eintritt und Austritt von Wasser in den/aus dem zweiten Körper zu ermöglichen; und
die Schenkel (4) und/oder der erste Körper (1) ein Verriegelungssystem aufweisen, das dazu konfiguriert ist, die Relativposition zwischen den Schenkeln und dem ersten Körper zu verriegeln.

2. Vorrichtung nach Anspruch 1, wobei die Schenkel eine Länge aufweisen, die gleich oder größer ist als die Summe aus der Entfernung zwischen der ersten Bezugsebene und der zweiten Bezugsebene plus 55 % der Entfernung zwischen der ersten Bezugsebene und der zweiten Oberfläche des zweiten Körpers.

3. Vorrichtung nach einem der vorhergehenden Ansprüche, wobei die Durchgangslöcher (7) eine Vielzahl von Rollen umfassen, um ein reibungsloses Gleiten der Schenkel innerhalb der Durchgangslöcher (7) zu gewährleisten.

4. Vorrichtung nach einem der vorhergehenden Ansprüche, wobei der zentrale Abschnitt (5) hohl ist und einen Hauptquerschnitt mit einer Fläche aufweist, die größer ist als der Querschnitt eines der Hohlarme, wobei der Hauptquerschnitt die Turmachse enthält und der Querschnitt der Hohlarme gemäß einer Ebene gemessen wird, die senkrecht zur Turmachse und senkrecht zur ersten Oberfläche des Hohlarms liegt.

5. Vorrichtung nach einem der vorhergehenden Ansprüche, wobei jeder Schenkel (4) einen Anschlag umfasst, der dazu konfiguriert ist, mit jedem Durchgangsloch (7) zusammenzuwirken, um zu verhindern, dass der Schenkel (4) aus dem ersten Körper (1) hervorkommt.

6. Vorrichtung nach einem der vorhergehenden Ansprüche, wobei das Verriegelungssystem Hydraulikzylinder (15) umfasst.

7. Vorrichtung nach einem der vorhergehenden Ansprüche, wobei der zweite Körper (2) eine abgeschrägte hohle Polygonform, vorzugsweise ein abgeschrägtes hohles Dreieck, aufweist.

8. Vorrichtung nach einem der vorhergehenden Ansprüche, wobei jeder abgeschrägte Scheitelpunkt des Dreiecks einen der Schenkel (4) aufnimmt.

9. Vorrichtung nach einem der vorhergehenden Ansprüche, wobei der Abstützkörper (3) eine Vielzahl von planaren Vorsprüngen (9) umfasst, die radial angeordnet sind, wobei die Abmessung in Richtung der Achse des Abstützkörpers größer ist als die Abmessung in radialer Richtung.

10. Vorrichtung nach einem der vorhergehenden Ansprüche, wobei der erste Körper (1) ebene Platten (11) umfasst, die sich von der Basis des ersten Körpers, die näher am zweiten Körper (2) liegt, fortsetzen.

11. Vorrichtung nach einem der vorhergehenden Ansprüche, ferner umfassend Verankerungsleinen (8), die an dem ersten Körper angebracht sind.

12. Vorrichtung nach einem der vorhergehenden Ansprüche, wobei die Schenkel (4) eine zylindrische Form aufweisen.

13. Vorrichtung nach einem der vorhergehenden Ansprüche, wobei die Schenkel (4) erste Führungselemente (13) umfassen und die Durchgangslöcher (7) zweite Führungselemente (14) umfassen, die dazu konfiguriert sind, mit den ersten Führungselementen (13) zusammenzuwirken, um die Bewegung der Schenkel (4) durch die Durchgangslöcher (7) zu führen.

14. Vorrichtung nach Anspruch 13, wobei eines der Führungselemente eine Nut ist und das andere Führungselement ein Vorsprung ist, der dazu konfiguriert ist, durch die Nut zu gleiten.

## Revendications

1. Dispositif pour soutenir une tour d'éolienne, le dispositif comprenant un premier corps (1), un corps de support (3) fixé au premier corps (1), un second corps (2) et une pluralité de jambes (4) fixées au second corps (2), dans lequel

le corps de support (3) présente un intérieur cylindrique qui définit un axe de tour et est configuré pour assurer le support et la connexion d'une tour d'éolienne (10) ;

le premier corps (1) comprend une partie centrale (5) reliée au corps de support (3) et une pluralité de bras creux (6) reliés à la partie centrale (5), chaque bras creux (6) s'étendant radialement à partir de la partie centrale (5) et comprenant une première surface perpendiculaire à l'axe de la tour et une seconde surface parallèle à la première surface, les premières surfaces des bras creux étant contenues dans un premier plan de référence (100) et les secondes surfaces des bras creux étant contenues dans un second plan de référence (101), le premier plan de référence (100) étant plus éloigné du second corps (2) que le second plan de référence (101) ;

chaque bras creux (6) comprend un trou traversant (7) qui s'étend de la première surface à la seconde surface, le trou traversant (7) étant configuré pour permettre le passage d'une jambe (4) à travers le trou traversant ;

le premier corps (1) présente un volume et un poids configurés pour fournir, lorsqu'il est vide, une flottabilité d'au moins 20 % du poids de l'ensemble du dispositif, le poids du premier corps (1) étant inférieur à 8 % du poids de l'ensemble du dispositif ;

le premier corps (1) comporte un premier élément de gestion de ballast pour permettre sélectivement l'entrée et la sortie d'eau dans/du premier corps ;

le second corps (2) présente une première surface (20) et une seconde surface (21), toutes deux parallèles aux premier et second plans de référence, la première surface (20) étant plus proche du premier corps (1) que la seconde surface (21) ;

le second corps (2) comporte un élément de gestion de ballast pour permettre sélectivement l'entrée et la sortie d'eau dans/du second corps ; et

les jambes (4) et/ou le premier corps (1) comportent un système de verrouillage configuré pour verrouiller la position relative entre les jambes et le premier corps.

2. Dispositif selon la revendication 1, dans lequel les jambes ont une longueur égale ou supérieure à la somme de la distance entre le premier plan de référence et le second plan de référence, plus 55 % de la distance entre le premier plan de référence et la seconde surface du second corps.

3. Dispositif selon l'une quelconque des revendications précédentes, dans lequel les trous traversants (7) comprennent une pluralité de rouleaux pour assurer un coulissement fluide des jambes à l'intérieur des trous traversants (7).

4. Dispositif selon l'une quelconque des revendications précédentes, dans lequel la partie centrale (5) est creuse et présente une section principale ayant une aire supérieure à la section de chacun des bras creux, ladite section principale contenant l'axe de la tour et la section des bras creux étant mesurée selon un plan perpendiculaire à l'axe de la tour et perpendiculaire à la première surface dudit bras creux.

5. Dispositif selon l'une quelconque des revendications précédentes, dans lequel chaque jambe (4) comprend une butée configurée pour coopérer avec chaque trou traversant (7) afin d'empêcher la jambe (4) de sortir du premier corps (1).

6. Dispositif selon l'une quelconque des revendications précédentes, dans lequel le système de verrouillage comprend des vérins hydrauliques (15).

7. Dispositif selon l'une quelconque des revendications précédentes, dans lequel le second corps (2) présente une forme polygonale creuse biseautée, de préférence un triangle creux biseauté.

8. Dispositif selon l'une quelconque des revendications précédentes, dans lequel chaque sommet biseauté du triangle reçoit l'une des jambes (4).

9. Dispositif selon l'une quelconque des revendications précédentes, dans lequel le corps de support (3) comprend une pluralité de saillies planes (9) disposées de manière radiale, la dimension dans la direction de l'axe du corps de support étant supérieure à la dimension dans la direction radiale.

10. Dispositif selon l'une quelconque des revendications précédentes, dans lequel le premier corps (1) comprend des plaques planes (11) s'étendant à partir de la base du premier corps qui est la plus proche du second corps (2).

11. Dispositif selon l'une quelconque des revendications précédentes, comprenant en outre des lignes d'amarrage (8) fixées au premier corps.

12. Dispositif selon l'une quelconque des revendications précédentes, dans lequel les jambes (4) présentent une forme cylindrique.

13. Dispositif selon l'une quelconque des revendications précédentes, dans lequel les jambes (4) comprennent des premiers éléments de guidage (13) et les trous traversants (7) comprennent des seconds éléments de guidage (14), configurés pour coopérer avec les premiers éléments de guidage (13) afin de guider le mouvement des jambes (4) à travers les trous traversants (7).

14. Dispositif selon la revendication 13, dans lequel l'un des éléments de guidage est une rainure et l'autre élément de guidage est une saillie configurée pour coulisser dans la rainure.

**FIG. 1**

**FIG. 2**

**FIG. 3**

**FIG. 4**

FIG. 5

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018189084 A1

- WO 2018150064 A1